**Europäisches Patentamt**

**European Patent Office**

**Office européen des brevets**

(19)

(11) Veröffentlichungsnummer: **0 226 532 B1**

(12) **EUROPÄISCHE PATENTSCHRIFT**

(45) Veröffentlichungstag der Patentschrift: **31.07.91**    (51) Int. Cl.⁵: **H02B 11/00**

(21) Anmeldenummer: **86730202.8**

(22) Anmeldetag: **05.12.86**

(54) **Elektrische Schaltzelle mit einem Verstellantrieb für ein verfahrbar angeordnetes Schaltgerät.**

(30) Priorität: **20.12.85 DE 8536282 U**

(43) Veröffentlichungstag der Anmeldung:
**24.06.87 Patentblatt 87/26**

(45) Bekanntmachung des Hinweises auf die
Patenterteilung:
**31.07.91 Patentblatt 91/31**

(84) Benannte Vertragsstaaten:
**DE FR GB IT SE**

(56) Entgegenhaltungen:
**US-A- 2 768 254**
**US-A- 2 888 615**
**US-A- 4 305 610**

(73) Patentinhaber: **Siemens Aktiengesellschaft**
**Wittelsbacherplatz 2**
**W-8000 München 2(DE)**

(72) Erfinder: **Bohnen, Peter, Ing.**
**Solmstrasse 22**
**W-1000 Berlin 61(DE)**

## Beschreibung

Die Erfindung betrifft eine elektrische Schaltzelle mit einem eine Gewindespindel aufweisenden Verstellantrieb für ein verfahrbar angeordnetes Schaltgerät und mit einer die Schaltzelle abschließenden Tür (US-A-2 888 615).

Die Bedienung einer solchen Schaltzelle kann für den Benutzer mit Gefahren verbunden sein, beispielsweise dadurch, daß die Tür der Schaltzelle geöffnet wird, wenn nicht alle in der Schaltzelle befindlichen Teile spannungsfrei sind. Der Erfindung liegt die Aufgabe zugrunde, eine von dem normalen Türverschluß unabhängige Vorrichtung zu schaffen, welche die Tür der Schaltzelle nur dann zum Öffnen freigibt, wenn sich das in der Schaltzelle befindliche Schaltgerät in seiner Trennstellung befindet und somit spannungsfrei ist.

Gemäß der Erfindung wird diese Aufgabe dadurch gelöst, daß am Boden der Schaltzelle ein schwenkbar gelagerter Riegelhebel mit einer Steuerkurve angeordnet ist, mit der ein mit dem Verstellantrieb verbundenes Führungsorgan zusammenwirkt und daß an der Tür der Schaltzelle ein mit einer Nase des Riegelhebels zusammenwirkender Schloßbügel angebracht ist. Die Steuerkurve läßt sich ohne Schwierigkeit so gestalten, daß der Riegelhebel erst kurz vor dem Erreichen der Trennstellung des Schaltgerätes die Nase aus dem Schloßbügel ausgehoben und die Tür der Schaltzelle hierdurch freigegeben wird.

Insbesondere kann die Steuerkurve als gekrümmtes bzw. abgeknicktes Langloch ausgebildet sein, während das Führungsorgan als ein Führungsstift ausgebildet ist, der mit einem in der Arbeitsrichtung des Verstellantriebes bewegbaren Teil verbunden ist. Zur Gewinnung der gewünschten Sicherheitsfunktion werden somit nur einfach herstellbare und robuste Teile benötigt.

Wenn nach einer Weiterbildung der Erfindung der Schloßbügel an einem Lagerbock gegen Federkraft schwenkbar gelagert ist und die Schließnase des Riegelhebels eine in die Schließrichtung der Tür wirksame Anlaufschräge besitzt, ist die neue Vorrichtung im Bedarfsfall überlistbar. Somit kann die Tür der Schaltzelle auch bei nicht in seiner Trennstellung befindlichem Schaltgerät geöffnet werden kann, wenn dies beispielsweise zur Vornahme von Justierungsarbeiten durch eine Fachkraft erforderlich ist. Dies kann dadurch erreicht werden, daß der Schloßbügel einen in dessen Grundstellung parallel zu der Ebene der Tür stehenden Mitnehmer besitzt, der durch eine Öffnung der Tür zur willkürlichen Betätigung des Schloßbügels zugänglich ist. Es empfiehlt sich, die Öffnung der Tür für den Durchtritt eines Werkzeuges mit einem geringen Durchmesser zu bemessen und die Öffnung durch ein Verschlußorgan abdeckbar zu machen.

Auf diese Weise wird einer unerwünschten und gefährlichen Manipulation der Vorrichtung in solchem Maß vorgebeugt, daß eine zufällige oder mißbräuchliche Überlistung der Türverriegelung nicht in Betracht kommt.

Es ist üblich, verfahrbar angeordnete Schaltgeräte nicht direkt in einem entsprechenden Raum eines Schaltschrankes oder einer Schaltanlage verfahrbar anzuordnen, sondern einen sogenannten Einschubrahmen vorzusehen, der das Schaltgerät aufnimmt und der seinerseits in der Schaltzelle bzw. einem Schaltschrank befestigt wird. Bei einer Ausgestaltung einer Schaltzelle in dieser Weise empfiehlt es sich, den Riegelhebel auf einer Bodenplatte des Einschubrahmens anzuordnen und den Führungsstift an einer als bewegliches Widerlager der Gewindespindel dienenden Traverse zu befestigen.

Die Erfindung wird im folgenden anhand des in den Figuren dargestellten Ausführungsbeispieles näher erläutert.

Die Figur 1 zeigt einen Ausschnitt einer Schaltzelle mit einem Verstellantrieb für ein Schaltgerät.

In den Figuren 2 und 3 ist ein Riegelhebel in zwei rechtwinklig zueinander stehenden Ansichten dargestellt.

Die Figuren 4 und 5 zeigen ebenfalls in zwei rechtwinklig zueinander stehenden Ansichten einen Lagerbock mit einem Schloßbügel.

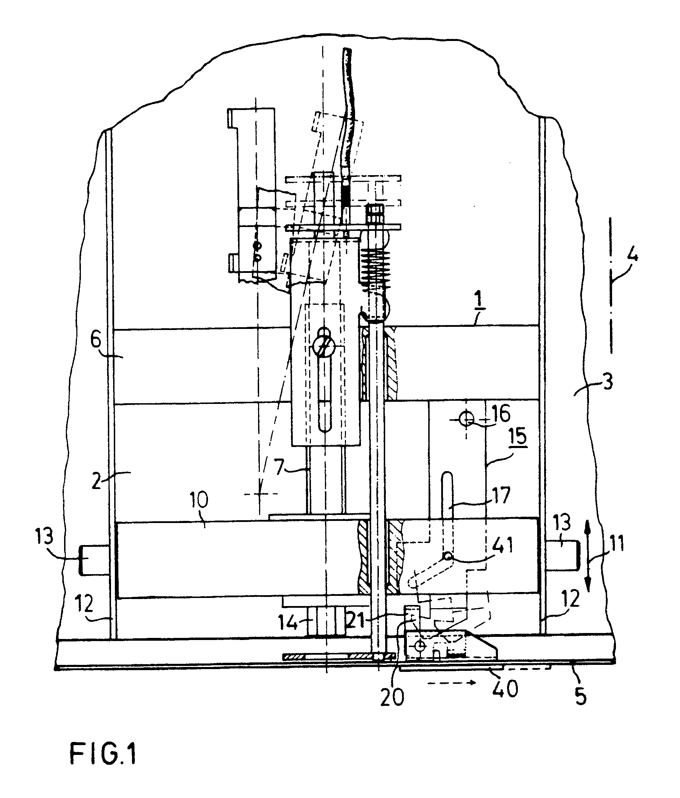

In der Figur 1 ist eine als Ganzes mit 1 bezeichneter Verstellantrieb 1 gezeigt, der sich an der Bodenplatte 2 eines Einschubrahmens 3 befindet. Der Einschubrahmen ist seinerseits in eine in der Figur 1 angedeutete Schaltzelle 4 eingebaut. Die bedienungsseitige Öffnung der Schaltzelle 4 ist durch eine teilweise gezeigte Tür 5 verschließbar.

Der Verstellantrieb umfaßt eine mit der Bodenplatte 2 verbundene Traverse 6, die als Mutterstück einer Gewindespindel 7 dient. Eine weitere Traverse 10 bildet ein bewegbares Widerlager der Gewindespindel 7 und ist somit durch eine Gewindespindel in der Richtung des Doppelpfeiles 11 verstellbar. Durch Öffnungen in seitlichen Führungswangen 12 hindurchragende Bolzen 13 dienen zur Kupplung des Verstellantriebes mit einem nicht dargestellten Schaltgerät, beispielsweise einem Niederspannungs-Leistungsschalter. Der Leistungsschalter ist somit durch Betätigung der Gewindespindel 7 mittels eines auf das Kopfstück 14 der Gewindespindel 7 aufzusetzenden Werkzeuges gleichfalls in der Richtung des Doppelpfeiles 11 verschiebbar. Die Verschiebung dient insbesondere dazu, das Schaltgerät bzw. den Leistungsschalter wahlweise in seine Betriebsstellung, eine Teststellung oder eine Trennstellung zu verfahren.

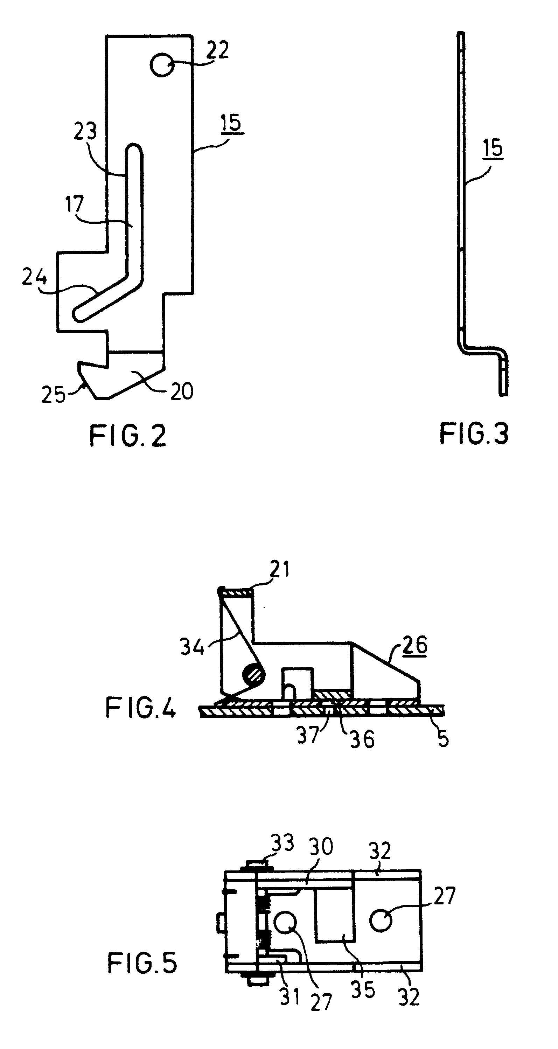

Die Tür 5 der Schaltzelle 4 soll sich nur dann öffnen lassen, wenn sich das Schaltgerät in seiner Trennstellung befindet und somit alle elektrischen Verbindung zwischen dem Schaltgerät und dem ortsfesten Kontakten der Schaltzelle 4 unterbrochen sind. Hierzu ist an der Bodenplatte 2 des Einschubrahmens 3 ein Riegelhebel 15 um einen Lagerbolzen 16 schwenkbar gelagert. Der Riegelhebel 15 weist ein Langloch 17 mit abgeknickten Verlauf sowie eine Schließnase 20 auf, die mit einem an der Innenseite der Tür 5 angebrachten Schloßbügel 21 zusammenwirkt. Einzelheiten des Riegelhebels 15 und des Schloßbügels 21 werden im folgenden anhand der Figuren 2 und 3 bzw. 4 und 5 erläutert.

Der Riegelhebel 15 besteht aus einem Blech geeigneter Stärke und weist an seinem einen Ende eine Lageröffnung 22 auf. Das Langloch 17 besitzt einen längeren, sich in der Längsrichtung des Riegelhebels 15 erstreckenden Abschnitt 23 sowie einen diesem Abschnitt gegenüber abgewinkelten Abschnitt 24 auf, dessen Wirkungsweise noch erläutert wird. Die Schließnase 20 befindet sich an dem der Lageröffnung 20 gegenüberliegenden Ende des Riegelhebels 15 in einer durch zweimalige Abwinklung nach entgegengesetzten Richtungen gegenüber dem übrigen Teil des Riegelhebels versetzen Ebene. Die Außenseite der Schließnase ist mit einer Anlaufschräge 25 versehen, die beim Schließen der Tür 5 (Figur 1) mit eingeschwenktem Riegelhebel wirksam ist.

Wie die Figuren 4 und 5 zeigen, ist der Schloßbügel 21 an einem Lagerbock 26 angebracht, der ein etwa U-förmiges Profil aufweist und in seinem Mittelteil Öffnungen 27 zur Befestigung des Lagerbockes an der Tür 5 (Figur 1) besitzt. Der Schloßbügel 21 besitzt seitliche Schenkel 30 und 31, deren Abstand so bemessen ist, daß sie zwischen den Schenkeln 32 des Lagerbockes 26 aufgenommen werden können. Ein Lagerbolzen 33 durchsetzt die Schenkel 32 des Lagerbockes 26 sowie die Schenkel 30 und 31 des Schloßbügels 21. Eine Drehfeder 34 spannt den Schloßbügel in eine gegenüber der Ebene des Mittelteiles des Lagerbockes 26 rechtwinklige Stellung vor.

Der Schenkel 30 des Lagerbügels 21 ist gegenüber dem Schenkel 31 verlängert ausgeführt und besitzt eine Abwinklung 35, die als Mitnehmer zur willkürlichen Betätigung des Schloßbügels 21 zu benutzen ist. Hierzu ist der Mittelteil des Lagerbockes 26 mit einer unterhalb der Abwinklung 35 mündenden Öffnung 36 versehen. Durch eine hiermit korrespondierende Öffnung 37 in der Tür 5 läßt sich ein geeignetes Werkzeug einführen, um die Tür 5 zu entriegeln, wenn dies zur Durchführung spezieller Arbeiten in der Schaltzelle 4 erforderlich ist. An der Tür 5 befindet sich ein beispielsweise gradlinig verschiebbares oder schwenkbares Abdeckorgan 40, das die Öffnung in der Tür 5 verdeckt. Es empfiehlt sich, diese Öffnung so zu bemessen, daß nur ein Werkzeug mit besonders geringem Durchmesser eingeführt werden kann. Auf diese Weise ist leicht zu vermeiden, daß üblicherweise vorhandene Werkzeuge, z. B. Schraubendreher, Kugelschreiber oder ähnliche Geräte mißbräuchlich benutzt werden können.

Der Riegelhebel 15 wirkt mit einem Führungsstift 41 zusammen, der gemäß der Figur 1 an der Traverse 10 derart befestigt ist, daß er in das Langloch 17 eingreift. Die dort gezeigte Stellung der Traverse 10 entspricht der Teststellung des verfahrbaren Schaltgerätes. Wird diese durch weitere Drehung der Gewindespindel 7 weiter in Richtung der Tür 5 verschoben, so gelangt der Führungsstift 41 in den abgewinkelten Abschnitt 24 des Langloches 17, wodurch der Riegelhebel 15 um den Lagerbolzen 16 entgegen dem Uhrzeigersinn in Figur 1 geschwenkt wird. Die Schließnase 20 gelangt dadurch außer Eingriff mit dem Schloßbügel 21. Die Tür 5 kann nun in üblicher Weise geöffnet werden.

Bei einer Betätigung des Verstellantriebes in umgekehrter Richtung wird der Riegelhebel 15 nach dem Schließen der Tür 5 durch den Führungsstift 41 in der umgekehrten Richtung geschwenkt, bis die Schließnase 20 wieder hinter den Schloßbügel 21 greift. Beim weiteren Verfahren des Schaltgerätes und einer entsprechenden Verschiebung der Traverse 10 in das Innere der Schaltzelle 4 hinein bleibt der Riegelhebel 15 unbeeinflußt, weil sich der Abschnitt 23 des Langloches 17 in der Verschiebungsrichtung erstreckt.

Ist es erforderlich, bei nicht in seiner Trennstellung befindlichem Schaltgerät die Tür 5 zu öffnen, so ist dies in der schon erwähnten weise durch Einführung eines geeigneten Werkzeuges durch die Öffnung der Tür 5 und die Öffnung 36 des Lagerbockes 26 möglich, den Schloßbügel 21 entgegen der Kraft der Feder 34 zu schwenken und außer Eingriff der Schließnase 20 zu bringen. Nach Durchführung der Arbeiten ist jedoch die Tür 5 ohne besondere Vorkehrungen zu schließen, weil der Schloßbügel 21 auf die Anlaufschräge 25 der Schließnase 20 gelangt und dadurch selbsttätig einschnappt.

## Patentansprüche

1. Elektrische Schaltzelle (4) mit einem eine Gewindespindel (7) aufweisenden Verstellantrieb (1) für ein verfahrbar angeordnetes Schaltgerät und mit einer die Schaltzelle (4) abschließenden Tür (5), **dadurch gekennzeichnet,** daß am Boden der Schaltzelle (4) ein schwenkbar gelagerter Riegelhebel (15) mit einer Steuerkurve (17) angeordnet ist, mit der ein mit dem Verstellantrieb (1) verbundenes Führungsorgan (41) zusammenwirkt und daß an der Tür (5) der Schaltzelle (4) ein mit einer Nase (20) des Riegelhebels (15) zusammenwirkender Schloßbügel (21) angebracht ist.

2. Schaltzelle nach Anspruch 1, **dadurch gekennzeichnet**, daß die Steuerkurve als gekrümmtes bzw. abgeknicktes Langloch (17) und das Führungsorgan als ein Führungsstift (41) ausgebildet ist, der mit einem in der Arbeitsrichtung (11) des Verstellantriebes (1) bewegbaren Teil (10) verbunden ist.

3. Schaltzelle nach Anspruch 1, **dadurch gekennzeichnet**, daß der Schloßbügel (21) an einem Lagerbock (26) gegen Federkraft (34) schwenkbar gelagert ist und daß die Schließnase (20) des Riegelhebels (15) eine in der Schließrichtung der Tür (5) wirksame Anlaufschräge (25) besitzt.

4. Schaltzelle nach Anspruch 3, **dadurch gekennzeichnet**, daß der Schloßbügel (21) einen in dessen Grundstellung parallel zu der Ebene der Tür (5) stehenden Mitnehmer (35) besitzt, der durch eine Öffnung (37) der Tür (5) zur willkürlichen Betätigung des Schloßbügels (21) zugänglich ist.

5. Schaltzelle nach Anspruch 4, **dadurch gekennzeichnet**, daß die Öffnung (37) der Tür (5) für den Eintritt eines Werkzeuges mit geringem Durchmesser bemessen ist und daß die Öffnung (37) durch ein Verschlußorgan (40) abdeckbar ist.

6. Schaltzelle nach Anspruch 2, **dadurch gekennzeichnet**, daß der Riegelhebel (15) auf einer Bodenplatte (2) eines in die Schaltzelle (4) eingesetzten Einschubrahmens (3) angeordnet ist und daß sich der Führungsstift (41) an einem als bewegliches Widerlager der Gewindespindel (7) dienenden Traverse (10) befindet.

## Claims

1. Electrical switchgear cubicle (4) with a displacing drive (1), which has a threaded spindle (7), for a switching apparatus, which is arranged so that it may be moved, and with a door (5) which closes the switchgear cubicle (4), characterised in that arranged on the base of the switchgear cubicle (4) there is a pivotally mounted locking lever (15) with a control curve (17) with which there cooperates a guide part (41), connected with the displacing drive (1), and in that fitted on the door (5) of the switchgear cubicle (4) there is a lock shackle (21) cooperating with a lug (20) of the locking lever (15).

2. Switchgear cubicle according to claim 1, characterised in that the control curve is formed as a curved or angled elongated hole (17) and the guide part is formed as a guide pin (41) which is connected with a part (10) which may be moved in the working direction (11) of the displacing drive (1).

3. Switchgear cubicle according to claim 1, characterised in that the lock shackle (21) is pivotally mounted on a bearing block (26) against spring force (34) and in that the closing lug (20) of the locking lever (15) has an inclined surface (25) acting in the closing direction of the door (5).

4. Switchgear cubicle according to claim 3, characterised in that the lock shackle (21) has a driver (35) which in the initial position of the shackle is parallel to the plane of the door (5) and which is accessible through an opening (37) of the door (5) for the purposes of actuation of the lock shackle (21) when desired.

5. Switchgear cubicle according to claim 4, characterised in that the opening (37) of the door (5) is dimensioned for the entry of a tool with a small diameter and in that the opening (37) can be covered by a closing part (40).

6. Switchgear cubicle according to claim 2, characterised in that the locking lever (15) is arranged on a base plate (2) of a plug-in frame (3) which is inserted into the switchgear cubicle (4) and in that the guide pin (41) is located on a cross-member (10) which serves as a movable abutment of the threaded spindle (7).

## Revendications

1. Cellule de coupure électrique (4) équipé d'un dispositif d'entraînement (1), comportant une broche filetée (7), pour un appareil de coupure mobile, et une porte (5) fermant la cellule de coupure (4), caractérisée par le fait que sur le fond de la cellule de coupure (4) est disposé un levier de verrouillage (15) monté pivotant et comportant une came de commande (17), avec laquelle coopère un élément de guidage (41) relié au dispositif d'entraînement (1), et que sur la porte (5) de la cellule de coupure (4) est monté une barrette de fermeture (21) coopérant avec un bec (20) du levier de verrouillage (15).

2. Cellule de coupure suivant la revendication 1, caractérisée par le fait que la came de commande est réalisée sous la forme d'un trou allongé courbe ou coudé (17) et que l'élément de guidage est réalisé sous la forme d'une tige de guidage (41), qui est raccordée à une partie (10) déplaçable dans la direction de travail (11) du dispositif d'entraînement (1).

3. Cellule de coupure suivant la revendication 1, caractérisée par le fait que la barrette de fermeture (21) est montée sur un bloc de support (26), de manière à pouvoir pivoter à l'encontre de la force d'un ressort (34), et que le bec de fermeture (20) du levier de verrouillage (15) possède un biseau formant rampe (25) actif dans la direction de fermeture de la porte (5).

4. Cellule de coupure suivant la revendication 3, caractérisée par le fait que la barrette de fermeture (21) possède un élément d'entraînement (35), qui, lorsque la barrette est dans sa position de base, est parallèle au plan de la porte (5) et est accessible par une ouverture (37) de la porte (5), pour permettre un actionnement à volonté de la barrette de fermeture.

5. Cellule de coupure suivant la revendication 4, caractérisée par le fait que l'ouverture (37) de la porte (5) est dimensionnée de manière à permettre l'entrée d'un outil possédant un faible diamètre et que l'ouverture (37) peut être masquée par un organe de fermeture (40).

6. Cellule de coupure suivant la revendication 2, caractérisée par le fait que le levier de verrouillage (15) est monté sur une plaque de base (2) dans un cadre formant tiroir (3) monté dans la cellule de coupure (4), et que la tige de guidage (41) est située sur une traverse (10) utilisée comme butée mobile de la broche filetée (7).

FIG.1

FIG.2

FIG.3

FIG.4

FIG.5